# EUROPÄISCHE PATENTSCHRIFT

(11) **EP 1 494 902 B1**
(45) Veröffentlichungstag und Bekanntmachung des Hinweises auf die Patenterteilung: **05.11.2008**
(21) Anmeldenummer: 03722240.3
(22) Anmeldetag: 28.03.2003
(51) Int. Cl.: B60S 1/38, B60S 1/40

(54) **WISCHHEBEL MIT EINEM WISCHERARM UND EINEM AN DIESEM ANGELENKTEN WISCHBLATT**
WIPER LEVER COMPRISING A WIPER ARM AND A WIPER BLADE WHICH IS CONNECTED TO THE SAME IN AN ARTICULATED MANNER
LEVIER D'ESSUIE-GLACE MUNI D'UN BRAS D'ESSUIE-GLACE ET D'UN BALAI D'ESSUIE-GLACE ARTICULE DESSUS

(30) Priorität: 04.04.2002 DE 10214956; 23.07.2002 DE 10233531; 08.08.2002 DE 10236385; 19.09.2002 DE 10243662; 12.12.2002 DE 10257988
(43) Veröffentlichungstag der Anmeldung: 12.01.2005
(60) Teilanmeldung: 08105132.8
(73) Patentinhaber: ROBERT BOSCH GMBH, 70442 Stuttgart (DE)
(72) Erfinder: VERELST, Hubert, B-3300 Tienen (BE); WINDMOLDERS, Eric, B-3510 Kermt (BE); WILMS, Christian, B-3582 Beringen (BE); BEELEN, Hans, B-3540 Herk de Stad (BE); VERTONGEN, Robert, B-3800 Sinterueiten (BE)
(86) Internationale Anmeldenummer: PCT/DE2003/001030
(87) Internationale Veröffentlichungsnummer: WO 2003/084789

(56) Entgegenhaltungen:
- WO-A-02/40328
- WO-A-02/053421
- WO-A-03/080409
- DE-A- 19 860 644
- DE-U- 8 522 252

## Beschreibung

### Stand der Technik

Die Erfindung betrifft einen Wischhebel nach der im Anspruch 1 bezeichneten Art. Der Wischhebel umfasst einen angetriebenen Wischerarm, an dem mit Abstand von dessen Antriebsende ein quer zu seiner Längserstreckung über die zu wischenden Scheibe verschiebbares Wischblatt angelenkt ist. Die Gelenkachse des Wischblatts erstreckt sich im wesentlichen in dessen Verschieberichtung. Dieses Gelenk ist von besonderer Bedeutung, weil die zu wischende, in aller Regel sphärisch gekrümmte Scheibe, - beispielsweise die Windschutzscheibe eines Kraftfahrzeuges - nicht einen Abschnitt einer Kugeloberfläche darstellt. Es muss sich deshalb das Wischblatt während seiner Wischbewegung ständig der jeweiligen Lage und dem Verlauf der Scheibenoberfläche in Bezug auf die Bewegungsebene des Wischerarms anpassen können. Dazu ist eine Schwingbewegung des Wischblatts gegenüber dem Wischerarm um die erwähnte Gelenkachse erforderlich. Bei einem bekannten gattungsgemäßen Wischhebel (DE-OS 10065124) WO-A-02/053421 fällt unter Art. 54(3) EPÜ 1973 ist dazu das Wischblatt über ein fest mit ihm verbundenes Gelenkteil mit entsprechend ausgerichteten Gelenkzapfen versehen, an denen ein zum Wischblatt gehörender Adapter angelenkt ist, über den das Wischblatt am Wischerarm angeschlossen werden kann. Am Adapter vorhandene Verriegelungsmittel sollen dabei im Zusammenwirken mit Gegenverriegelungsmitteln des Wischerarms für eine betriebssichere Verbindung zwischen Wischerarm und Wischblatt sorgen. Bei diesem im Querschnitt U-förmigen Adapter sind die Wände durch die beiden U-Schenkel des Adapters gebildet. An seiner vom Wischblatt abliegenden, die U-Basis bildenden Wand ist der Adapter mit einer parallel zur Ausrichtung der Wände elastisch auslenkbaren, einen Rastzahn aufweisenden Zunge versehen, die sich über das Wischerarmende hinaus erstreckt, wobei der als Verriegelungsmittel wirkende Rastzahn mit Gegenverriegelungsmitteln des Wischerarms im Sinne einer lösbaren Wischblatt-Sicherung zusammenarbeitet.

Die freiliegende Zunge kann jedoch auch unbeabsichtigt so ausgelenkt werden - beispielsweise durch die rotierenden Bürsten in Fahrzeugwaschanlagen - dass sich das Wischblatt vom Wischerarm löst und Beschädigungen am Fahrzeug verursacht.

### Vorteile der Erfindung

Bei dem erfindungsgemäßen Wischhebel mit den Merkmalen des Anspruchs 1 erfordern die an wenigstens einem der beiden Wände des Adapters angeordneten und im wesentlichen quer zu den Flächen dieser Wände bewegbaren Verriegelungsmittel zum Lösen der Verriegelung eine bewusste, zielgerichtete Handlung. Eine solche ist beim Gegenstand der Erfindung ohne Einschränkung möglich, weil der Zugriff für eine solche Handlung auch visuell frei liegt und die Lösebewegung keine schwierigen Handbewegungen erfordert. Die zum Lösen der Verriegelung erforderliche Querbewegung kann jedoch keinesfalls durch die Bürsten einer Waschanlage ausgelöst werden.

Dabei ist es hinsichtlich einer kompakten Bauweise der Gelenkverbindung besonders vorteilhaft, wenn gemäß einer Fortbildung der Erfindung der Adapter zumindest abschnittsweise einen U-förmigen Querschnitt hat, dessen U-Schenkel die beiden Wände bilden, zwischen welche am Gelenkteil ausgebildete Stützwände passend eintauchen.

Zur Verbesserung der Standzeit der hoch belasteten Lageraufnahmen für die Gelenkbolzen ist jeder U-Schenkel des Adapters an seiner Außenseite mit einem die Lageraufnahme umgebenden, kragenartigen Ansatz versehen, dem jeweils eine zumindest abschnittsweise an die Kontur des Ansatzes angepasste, zum freien Ende des jeweiligen U-Schenkels offene Aussparung zugeordnet ist.

Besondere konstruktiven Vorteile und eine in Wischrichtung gute Wischblatt-Führung ist gewährleistet, wenn der Adapter zwei mit Abstand voneinander befindliche Längswände des Gelenkteils mit seinen U-Schenkeln passend übergreift, wenn weiter die Gelenkmittel an den Längswänden und an den U-Schenkeln angeordnet sind und darüber hinaus die Verriegelungsmittel des aus einem elastischen Materials bestehenden Adapters an einer sich über die Längswände hinaus erstreckenden Verlängerung der U-Schenkel des Adapters befinden.

Wenn in Weiterbildung der Erfindung der pendelnd angetriebene Wischerarm den Adapter mit einem im Querschnitt U-förmigen Anschlussteil aufnimmt und sich die Verlängerung des Adapters zur Pendelachse erstreckt, ergibt sich ein kompakter Aufbau der Gelenkverbindung mit in diese integrierten Verbindungsmitteln.

Zur Verringerung vom Umwelteinflüssen auf die notwendige Leichtgängigkeit der Gelenkverbindung und die Betriebssicherheit der Verriegelung zwischen Wischerarm und Wischblatt befinden sich die Verriegelungsmittel des Adapters an der den mit den Gegenverriegelungsmitteln des Wischerarms versehenen U-Schenkeln des Anschlussteils zugewandten Außenseite der Verlängerung.

Die Verriegelung selbst kann dann auch in besonders einfacher Weise dadurch erreicht werden, dass an dem Adapter mit Abstand voneinander in dessen Längsrichtung einander entgegengesetzt ausgerichtete Anschläge ausgebildet sind, denen am Anschlussteil des Wischerarms vorhandene Gegenanschläge zugeordnet sind. Eine solche Anordnung sorgt darüber hinaus für die notwendige Sicherung des Wischblatts am Wischerarm in dessen Längsrichtung.

Um die Fertigungskosten gering zu halten, ist wenigstens einer der am Adapter befindlichen Anschläge durch dessen Verriegelungsmittel gebildet.

Zur Verbesserung der Betriebssicherheit der Verbindung zwischen Wischerarm und Wischblatt sind an jedem der beiden U-Schenkel des Adapters Verriegelungsmittel angeordnet, wobei bei einer solchen Ausführungsform der Erfindung zweckmäßig an jedem der beiden U-Schenkel des Anschlussteils die mit den Verriegelungsmitteln des Adapters zusammenarbeitenden Gegenverriegelungsmittel vorhanden sind.

Ein einfaches, Gewicht sparendes Gelenk wird erreicht, wenn dieses zwei aus den beiden Längswänden des Gelenkteils ragende Gelenkbolzen umfasst, deren Achsen miteinander fluchten sowie durch den Gelenkbolzen zugeordneten, in den U-Schenkeln des Adapters angeordneten Lageraufnahmen, welche jeweils über einen am freien Ende der U-Schenkel mündenden, auf den Durchmesser des jeweiligen Gelenkbolzens abgestimmten Montagekanal randoffen sind.

Damit der zum Wischblatt gehörende Adapter nach seiner Montage am Gelenkteil unverlierbar an den Gelenkbolzen gehalten ist, ist jeder Montagekanal mit einer elastisch aufweitbaren Verengung versehen.

Eine Vereinfachung der Gelenkverbindung und der Ausgestaltung der Verriegelungsmittel zwischen Wischerarm und Wischblatt wird erreicht, wenn die kragenartigen Ansätze zusammen mit dem an deren Verlauf angepassten Abschnitt der Aussparungen die einen Anschläge und Gegenanschläge bilden.

Der Adapter ist an wenigstens einem seiner U-Schenkel mit einer einen Rastzahn aufweisenden, elastisch auslenkbaren Zunge versehen, wobei der ein Verriegelungsmittel bildende Rastzahn eine zum kragenartigen Ansatz weisende Anschlagschulter hat, die mit einer am Anschlussteil ausgebildeten, vom kragenartigen Ansatz wegweisenden Gegenanschlagschulter zusammenwirkt.

Gemäß einer speziellen Ausführungsform der Erfindung hat die dem kragenartigen Ansatz zugeordnete Aussparung in den U-Schenkeln des Anschlussteils von ihrer Öffnung am freien Ende der U-Schenkel aus einen zu der Gegenanschlagschulter hin gekrümmten Verlauf. Der kragenartige Ansatz des Adapters wird dadurch in seiner zu verriegelnden Betriebsstellung von einer verbleibenden Wandzunge des Anschlussteils untergriffen und die Position des Adapters im Anschlussteil festgelegt.

Um die für die der Montage zu beachtende Positionierung des Wischblatts am Wischerarm auch dem Laien klar aufzuzeigen, sind bei einer Ausführungsform der Erfindung an jeder Außenseite der U-Schenkel des Adapters an dem von den Verriegelungsmitteln abgewandten Längs-Endbereich miteinander fluchtende, zapfenartige Stützen angeordnet, denen jeweils ein an der Stirnseite der U-Schenkel des Anschlussteils ausgebildetes Stützlager zugeordnet ist. Durch das Einlegen der Stützen in die Stützlager ergibt sich zwangsläufig eine Stellung, aus der alleine eine Verschwenkung des Wischblatts gegenüber dem Wischerarm um die gemeinsame Achse der Stützen die vorschriftsmäßige Betriebsstellung der beiden Teile des Wischhebels zueinander erreicht wird.

Die Position des Wischblatts in Längsrichtung des Wischerarms in dieser Betriebsstellung wird auf einfache Weise fixiert, wenn der Rastzahn des Adapters mit einer von der U-Basis des Adapters wegweisenden Halteschulter versehen ist, der eine am Anschlussteil ausgebildete, zu dessen U-Basis weisende Gegenhalteschulter zugeordnet ist.

In Fortbildung der Erfindung wirken sowohl am Anschlussteil des Wischerarms als auch am Wischblatt, insbesondere an dessen Adapter vorhandene Führungsmittel beim Zusammenbau dieser Bauteile zusammen derart, dass deren vorschriftsmäßige Positionierung zueinander zwangsläufig erreicht wird.

Eine solche Montagehilfe kann kostengünstig dadurch erreicht werden, dass die Führungsmittel des Wischblatts durch eine in den U-Schenkeln des Adapters vorhandene, an dessen U-Basis mündende nutartige Kulissenführung gebildet sind, in welche die am Anschlussteil angeordneten, als Führungszapfen ausgebildeten Führungsmittel eintauchen. Der Verlauf der Kulissenführung kann dabei den jeweiligen Erfordernissen angepasst werden, so dass Montagefehler ausgeschlossen sind.

Eine problemlose Zusammenführung von Wischblatt beziehungsweise von Adapter und dem Anschlussteil des Wischerarms ergibt sich, wenn die Führungsnut an ihrer Mündung mit einer trichterartigen Erweiterung versehen ist.

Damit die während des Wischbetriebs auf die Gelenkverbindung einwirkenden Kräfte sicher abgefangen werden, liegt der kragenartige Ansatz mit einer zum freien Ende des U-Schenkels weisenden Stützschulter an einer Gegenschulter des Anschlussteils an.

Zur einfachen Bedienung der Verbindungsmittel und auch zum Lösen der Gelenkverbindung ist an der die Verbindungsmittel des Adapters aufweisenden Verlängerung der U-Schenkel eine seitlich vorspringende Handhabe angeordnet.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

In der Zeichnung zeigen:
Figur 1 eine Seitenansicht eines am freien Ende eines Wischerarms angelenkten Wischblatts,
Figur 2 eine vergrößerte Darstellung einer in Figur 1 mit II bezeichneten, die Gelenkverbindung zwischen Wischblatt und Wischerarm bildende Einzelheit,
Figur 3 eine perspektivische Teildarstellung der Einzelheit gemäß Figur 2, in Richtung des Pfeiles III in Figur 2 gesehen,
Figur 4 die Einzelteile Gelenkverbindung gemäß Figur 2 als Explosionsdarstellung perspektivisch gezeichnet,
Figur 5 eine perspektivische Explosionsdarstellung der zu einer anders ausgebildeten Gelenkverbindung gehörenden Einzelteile,
Figur 6 die Einzelteile gemäß Figur 5 in einer Zwischen-Montagestellung,
Figur 7 die Gelenkverbindung mit den Einzelteilen gemäß Figur 5, in Betriebsposition dargestellt,
Figur 8 einen Schnitt entlang der Linie VIII-VIII durch die Gelenkverbindung gemäß Figur 7,
Figur 9 eine Explosionsdarstellung der Einzelteile einer weiteren Gelenkverbindung, in perspektivischer Anordnung gezeichnet,
Figur 10 eine Zwischen-Montagestellung der in Figur 9 dargestellten Einzelteile,
Figur 11 die Einzelteile gemäß Figur 9 im Zusammenbau in Betriebsstellung gezeichnet und
Figur 12 eine stark vergrößerte Teildarstellung der Anordnung gemäß Figur 10 zur Erläuterung des Zusammenbaus.

### Beschreibung der Ausführungsbeispiele

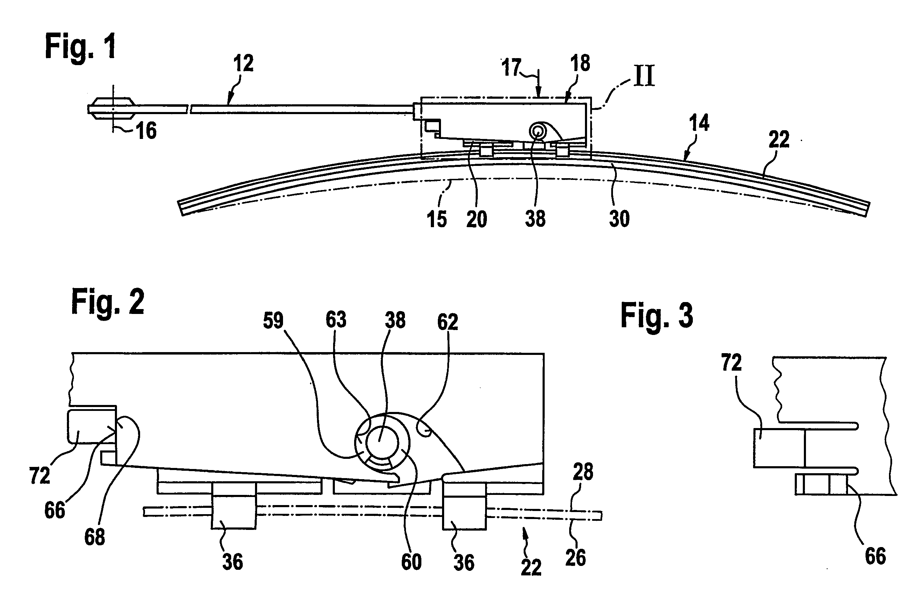

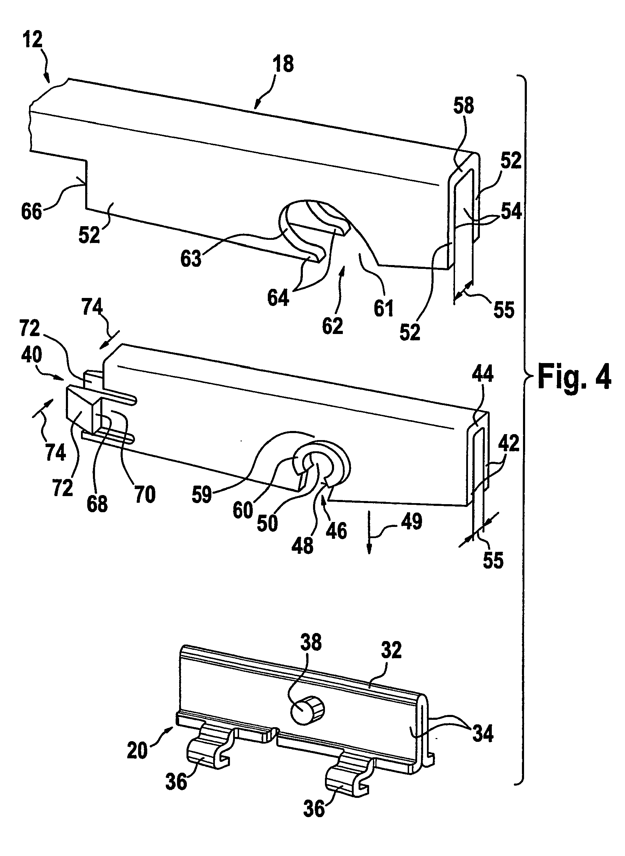

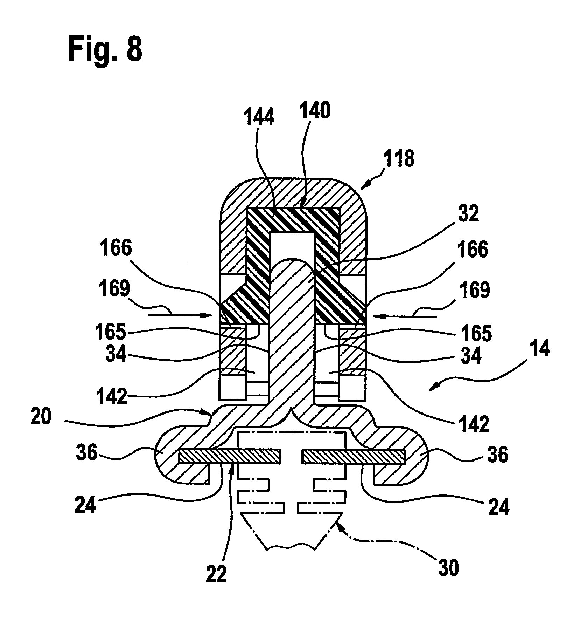

Zu einem in Figur 1 dargestellten Wischhebel 10 gehören ein Wischerarm 12 und ein an diesem angelenktes Wischblatt 14. Der Wischerarm 12 ist an seinem einen Ende um eine Achse 16 pendelnd angetrieben. Um die Gelenkverbindung zwischen Wischerarm und Wischblatt auf einfache Weise bewerkstelligen zu können, ist der Wischerarm an seinem anderen, freien Ende mit einem Kupplungsstück 18 versehen (Figuren 1 und 4), an welches das Wischblatt 14 mit einem Gelenkteil 20 über einen Adapter angeschlossen werden kann. Das Gelenkteil 20 ist fest mit einem Tragelement 22 des Wischblatts 14 verbunden, das beim Ausführungsbeispiel zwei in einer gemeinsamen Ebene und mit Abstand voneinander liegende, strichpunktiert gezeichnete Federschienen 24 aufweist (Figur 2). Das so gebildete, bandförmig langgestreckte, federelastische Tragelement 22 ist in seiner Längsrichtung über seine Bandflächen 26 und 28 gekrümmt (Figur 1). An seiner konkav gekrümmten Bandfläche 26 ist eine an der zu wischenden Scheibe 15 in Richtung des Pfeiles 17 anlegbare, gummielastische Wischleiste 30 angeordnet und an seiner anderen, konvex gekrümmten Bandfläche 28 sitzt das Gelenkteil 20. Diese Anordnung ist insbesondere aus Figur 8 klar ersichtlich, wo die Wischleiste 30 strichpunktiert eingezeichnet ist. Wie die Figuren 4 und 8 zeigen, hat das Gelenkteil 20 eine Längswand 32, deren beiden voneinander abgewandten Längswangen 34 Führungsflächen oder Stützwände bilden. Die Längswand 32 ist mit Haltekrallen 36 versehen, welche die voneinander abgewandten Längskanten der beiden Federschienen 24 umgreifen und die beiden Federschienen 24 in der erforderlichen Einbaulage sichern. Dies kann durch form- und/oder kraftschlüssig wirkende Mittel erfolgen. Weiter ist es denkbar, das Gelenkteil 20 im Bereich der Haltekrallen 36 mit den Federschienen 24 zu verschweißen. Aus der Längswand 32 beziehungsweise aus deren Längswangen 34 ragt beidseitig je ein quer zur Längsrichtung der Längswand ausgerichteter, die wischblattseitigen Gelenkmittel bildender Gelenkzapfen 38, von denen in Figur 4 jedoch nur der eine, an der dem Betrachter zugewandten Seite angeordnete Gelenkzapfen sichtbar ist. Die Achsen der beiden Gelenkzapfen 38 fluchten miteinander. Weiter gehört zum Wischblatt 14 noch der vorerwähnte Adapter 40 (Figur 4), der aus einem elastischen Kunststoff hergestellt ist. Der Adapter 40 hat einen im wesentlichen U-förmigen Querschnitt (Figur 4), dessen beide Wände bildenden U-Schenkel 42 sich von der U-Basis 44 aus zum Tragelement 22 erstrecken. Der Abstand zwischen den beiden U-Schenkeln 42 ist so auf die Dicke der Längswand 32 abgestimmt, dass diese spielarm zwischen den beiden Schenkeln 42 aufgenommen werden kann (Figur 8). Um dies zu ermöglichen, sind die beiden U-Schenkel 42 mit zu ihren freien Enden hin randoffenen Montagekanälen oder Aufnahmeschlitzen 46 versehen, die über je eine Verengung 48 in Lageraufnahmen 50 für die Gelenkzapfen 38 übergehen. Dadurch ist es möglich, den Adapter 40 mit dem Gelenkteil 20 unverlierbar zu verrasten, weil die Verengung 48 beim Aufrasten des Adapters 40 auf die Gelenkzapfen 38 des Gelenkteils 20 unter vorübergehender elastischer Aufweitung die Gelenkzapfen in ihre Lageraufnahmen 50 gelangen lässt, danach zurückfedert und ein Lösen des Adapters 40 von den Gelenkzapfen 38 verhindert. Der Adapter 40 ist somit unverlierbar am Kupplungselement 20 beziehungsweise an dessen Gelenkzapfen 38 um die Längsachse der Gelenkzapfen 38 pendelbar gehalten. Mit Hilfe dieses zum Wischblatt 14 gehörenden Adapters 40 kann das Wischblatt mit dem Kupplungsstück 18 des Wischerarms verbunden werden. Eine äußerst zweckmäßige Konstruktion sieht vor, dass das Kupplungsstück 18 des Wischerarms 12 ebenfalls einen U-förmigen Querschnitt hat, der so dimensioniert ist, dass sich die an den U-Schenkeln 52 des Kupplungsstücks 18 ausgebildeten Führungswänden 54 für das Wischblatt in einem Abstand 55 voneinander befinden, der passend auf die Breite 56 des Adapters 40 abgestimmt ist. Die U-Basiswand 58 des Kupplungsstücks 18 bildet praktisch eine Abdeckung für die Gelenkverbindung.

Die bis jetzt beschriebenen Konstruktionsmerkmale der Gelenkverbindung sind unabhängig von der Bedeutung für die Erfindung bei allen im Folgenden beschriebenen Ausführungsbeispielen der Erfindung vorhanden. Die einzelnen Ausführungsbeispiele der Erfindung unterscheiden sich besonders in der Anordnung und Ausgestaltung von Verriegelungsmitteln, welche stets für eine betriebssichere Verbindung zwischen Wischerarm und Wischblatt 14 sorgen, wenn das Wischblatt 14 mit seinem Adapter 40 zwischen die einander zugewandten Führungswände 54 der U-Schenkel 52 eingebracht worden ist (Figur 2). Deshalb werden im Folgenden hauptsächlich noch diese Verriegelungsmittel und deren Ausgestaltung und Anordnung erläutert, die sich jedoch bei den verschiedenen Ausführungsformen der Erfindung mehr oder weniger stark voneinander unterscheiden.

Dadurch, dass der Adapter 40 die Längswand 32 des Gelenkteils 20 spielfrei oder doch zumindest spielarm zwischen seinen U-Schenkeln 42 aufnimmt und darüber hinaus die einander zugewandten Führungswände 54 an den U-Schenkeln 52 des Kupplungsstücks 18 die U-Schenkel 42 ebenso spielfrei übergreifen, ergibt sich eine vorzügliche Führung für das Wischblatt, wenn dieses quer zu seiner Längserstreckung über die zu wischende Scheibe 15 verschoben wird. Eine möglichst spielfreie Führung des Wischblatts am Wischerarm wird angestrebt, weil eine solche der Ratterneigung des Wischblatts 14 auf der Scheibe 15 entgegenwirkt.

Eine erste Ausführungsform der Erfindung wird nun im Folgenden anhand der Figuren 2 bis 4 erläutert. Der Adapter 40 hat an seinen beiden von einander abgewandten äußeren Schenkelwangen jeweils einen kragenartigen Ansatz 60, der die jeweilige Lageraufnahme 50 umgibt. Dieser kragenartige Ansatz 60 vergrößert die Lagerfläche der Lageraufnahmen 50 und führt darüber hinaus zu einer Stabilisierung des Adapters 40 zumindest in dem Bereich, wo die Aufnahmeschlitze 46 für die Gelenkbolzen oder Gelenkzapfen 38 des Gelenkteils 20 angeordnet sind. Diesen beiden kragenartigen Ansätzen 60 ist jeweils eine randoffene Aussparung 62 in den die Führungswände 54 aufweisenden U-Schenkeln 52 des Kupplungsstücks 18 zugeordnet. Die Aussparungen 62 münden an den freien Enden der U-Schenkel 52. Die Endbereiche 63 der Aussparungen 62 sind in ihrer Form an die Konturen der Ansätze 60 angepasst. Dabei ist der Verlauf der Aussparungen 62 so gekrümmt, dass deren Endbereiche 63 näher an der Pendelachse 16 des Wischerarms 12 liegen als deren Mündungen 61 an den freien Enden der U-Schenkel 52. Dabei ist der Verlauf der dazu nötigen Krümmung so ausgelegt, dass im Randbereich der U-Schenkel 52 jeweils eine Sicherungszunge 64 verbleibt, die sich vom Endbereich 63 der Aussparung 62 aus zur Mündung 61 der Aussparung 62 erstreckt (Figur 4). In Verlängerung des Krümmungsverlaufs - also der Pendelachse 16 angenähert - ist an dem Kupplungsstück 18 eine Gegenanschlagschulter 66 ausgebildet, die zur Pendelachse 16 weist. Dieser Gegenanschlagschulter 66 ist eine Anschlagschulter 68 zugeordnet, welche am Adapter 40 ausgebildet ist. Dazu befinden sich an jedem der beiden U-Schenkel 42 des Adapters 40 elastisch auslenkbare Verlängerungen oder Zungen 70, an deren Außenseiten sich jeweils ein Rastzahn 72 befindet. An jedem der Rastzähne 72 befinden sich die vorerwähnten Anschlagschultern 68, welche zu den kragenartigen Ansätzen 60 weisen (Figur 4).

Ausgehend von einer Vormontagestellung gemäß Figur 4 der zum Wischhebel 10 gehörenden Einzelelemente 12 und 14 wird zu dessen Montage zunächst der Adapter 40 des Wischblatts in Richtung des Pfeiles 49 auf das Gelenkteil 20 des Wischblatts 14 aufgebracht. Unter vorübergehender elastischer Aufweitung der Verengung 48 in den U-Schenkeln 42 des Adapters 40 gelangen die Gelenkzapfen 38 des Gelenkteils 20 über die als Montagekanal dienenden Aufnahmeschlitze 46 in ihre Lageraufnahmen 50. Die maßliche Abstimmung dieser Bauelemente ist dabei so getroffen, dass der Adapter um die gemeinsame Achse der Gelenkzapfen 38 in gewissen Grenzen pendelbar ist. Weiter erstrecken sich die Zungen 70 über die Längswand 32 des Gelenkteils 20 hinaus, so dass sie unter Überwindung einer Rückstellkraft im wesentlichen quer zu den voneinander abgewandten Längswangen oder Flächen 34 der Längswand 32 bewegbar sind. Zum Zusammenfügen des Wischhebels wird nun das Wischblatt 14 mit seinem Adapter 40 zwischen die U-Schenkel 52 des als Anschlussteil dienenden Kupplungsstücks 18 des Wischerarms 12 eingebracht. Dabei werden die kragenartigen Ansätze 60 über die Mündungen 61 in die Aussparungen 62 eingeführt, bis die Kragenwände 59 an den Endbereichen 63 der Aussparungen 62 anschlagen. Während dieser Einführbewegung werden die an den Wänden beziehungsweise an den U-Schenkeln 42 des Adapters 40 angeordnete Zungen 70 manuell so aufeinanderzu - also quer zu den Flächen 34 - ausgelenkt, dass die Rastzähne 72 ebenfalls zwischen die U-Schenkel 52 des Anschlussteils 18 gelangen können. Wenn nun die Kragenwände 59 der Ansätze 60 an den Endbereich-Abschnitten 63 der Aussparungen 62 anschlagen (Figur 2), treten die Anschlagschultern 68 der Rastzähne 72 über die Gegenanschlagschultern 66 hinaus und federn in ihre Ausgangslage zurück. Dabei hintergreifen die Anschlagschultern 68 hakenartig die Gegenanschlagschultern 66 (Figuren 2 und 3). In Folge einer entsprechenden maßlichen Abstimmung ist nun das Wischblatt 14 am Wischerarm 12 in dessen Längsrichtung fixiert, weil der Abstand zwischen den Endbereichen 63 und den Gegenanschlagschultern 66 auf den Abstand zwischen den Anschlagschultern 68 und den Kragenwänden 59 abgestimmt ist. Die den Anschlagschultern 68 zugewandten Bereiche der Kragenwände 59 bilden zusammen mit diesen einander zugewandte Positionierungsschultern, denen die voneinander wegweisenden Gegenschultern - gebildet durch die Endbereiche 63 der Aussparungen 62 und die Gegenanschlagschultern 66 - zugeordnet sind (Figur 2). Zum Lösen des Wischblatts 14 vom Wischerarm 12 müssen die beiden Zungen 70 des Adapters 40 aufeinanderzu ausgelenkt werden (Pfeile 74 in Figur 4), bis deren Gegenanschlagschultern 68 die Anschlagschultern 66 des Anschlussteils 18 freigeben. Danach kann das Wischblatt zum freien Ende des Wischerarms hin gedrückt werden bis die Ansätze 60 aus den Aussparungen 62 heraustreten, so dass das Wischblatt 14 vom Wischerarm gelöst ist.

Es versteht sich von selbst, dass die von dem Zeichnungsbetrachter abgewandten Seiten des Anschlussteils 18 des Adapters 40 und des Gelenkteils 20 entsprechend den beschriebenen Vorderseiten dieser Bauelemente ausgebildet sind. Diese Feststellung gilt selbstverständlich auch für die weiteren noch zu beschreibenden Ausführungsformen der Erfindung.

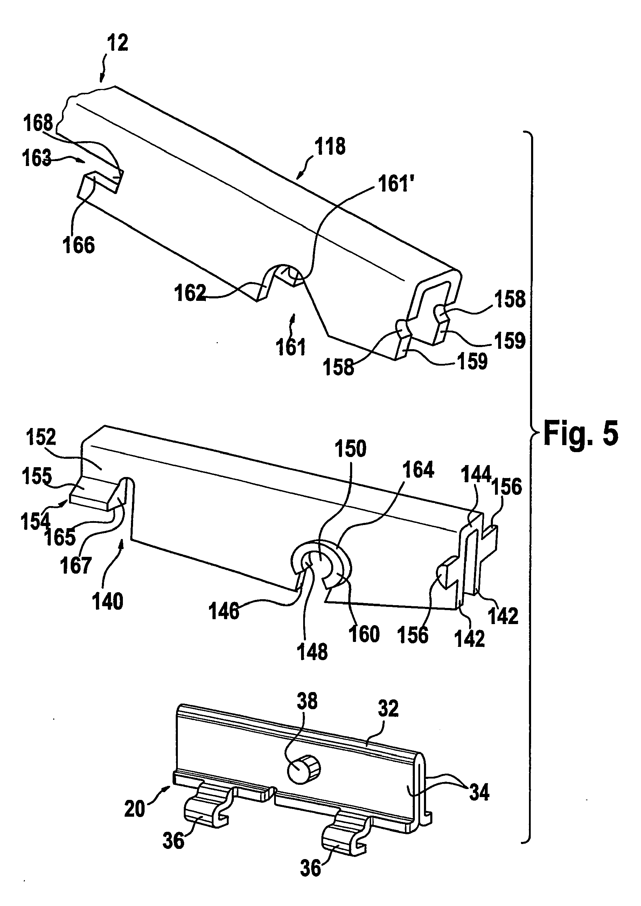

Bei einer anderen in den Figuren 5 bis 8 dargestellten Ausführungsform der Erfindung entspricht das Gelenkteil 20 dem vorstehend beschriebenen Gelenkteil. Auch bei dieser Ausführungsform hat der Adapter 140 einen U-förmigen Querschnitt mit U-Schenkeln 142, die mit randoffenen Aufnahmeschlitzen 146 versehen sind. Über Verengungen 148 münden die Aufnahmeschlitze 146 in Lageraufnahmen 150 für die Gelenkzapfen 38 des Gelenkteils 20. Kragenartige Ansätze 160 umgeben die Lageraufnahmen 150 und verbessern die Stabilität des Adapters sowie die Lagerung der Gelenkzapfen. Abweichend von der vorhergehend beschriebenen Ausführungsform der Erfindung erstrecken sich bei der Ausführungsform gemäß den Figuren 5 bis 8 an dem einen Ende des Adapters auslenkbare Zungen 152 von der U-Basis 144 des Adapters 140 in Richtung der Höhe der U-Schenkel 142, welche Wände darstellen, zwischen die die am Gelenkteil 20 ausgebildeten Stützwände passend eintauchen. Die Zungen 152 sind durch Verlängerungen der U-Schenkel 142 gebildet. An den Zungen 152 ist jeweils ein Rastzahn 154 angeordnet. Diese Rastzähne erstrecken sich von ihren Zungen 152 aus in einander entgegengesetzte Richtungen. Sie sind an ihrer der U-Basis 144 zugewandten Oberseite mit Anlaufschrägen 155 versehen. An dem bezüglich der Lageraufnahmen 150 anderen Ende des Adapters 140 weist dieser an der Außenseite eines jeden U-Schenkels 142 angeordnete zapfenartige Stützen 156 auf, die sich ebenfalls von einander weg erstrecken und an ihren den kragenartigen Ansätzen 160 zugewandten Seiten jeweils mit einer Rundung versehen sind. Diesen Rundungen zugeordnet sind als Stützlager dienende Aussparungen 158, an den Stirnseiten der U-Schenkel 159 des im Querschnitt U-förmigen Anschlussteils 118. Weiter sind die U-Schenkel des Anschlussteils 118 mit kragenartigen Ansätzen 160 versehen, denen zu den freien Enden der U-Schenkel hin randoffenen Aussparungen 161 zugeordnet sind. Die Aussparungen 161 haben je eine zu den Stützlagern 158 hin weisende Schulter 162. Bezogen auf die Aussparungen 161 sind gegenüberliegend den Stützlagern 158 in den U-Schenkeln 160 Ausklinkungen 163 vorgesehen, die den Rastzähnen 154 des Adapters 140 zugeordnet sind (Figur 5). Die Form der Aussparungen 161 ist an deren zentralen Bereich 161 dem Verlauf der Kragenwände 164 angepasst.

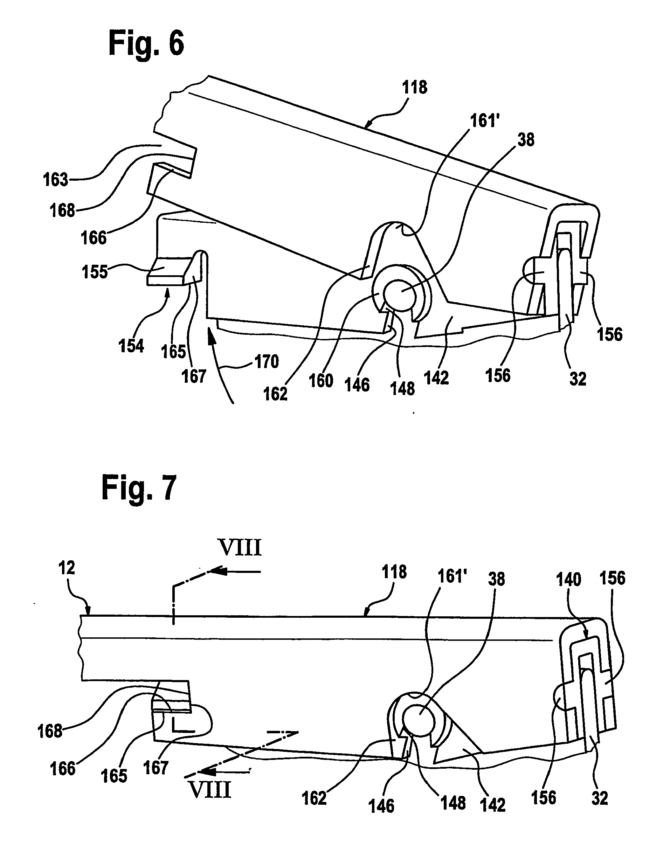

Beim Zusammenbau des Wischhebels wird - wie schon beschrieben - zunächst der Adapter 140 mit dem Gelenkteil 20 pendelbar verbunden. Danach wird gemäß Figur 6 das Wischblatt mit seinem Adapter 140 so am Anschlussteil 118 des Wischerarms angesetzt, dass die zapfenartigen Stützen 156 in den Stützlagern 158 liegen (Figur 6). Danach wird das Wischblatt in Richtung des Pfeiles 170 bezüglich des Wischerarms um eine Schwenkachse der zapfenartigen Stützen 156 geschwenkt, wobei die kragenartigen Ansätze in die ihnen zugeordneten Aussparungen 161 in den U-Schenkeln 159 des Anschlussteils 118 eintauchen. Dabei schlagen die Anlaufschrägen 155 der Rastzähne 154 an den freien Enden der U-Schenkel 159 an und werden aufeinanderzu elastisch ausgelenkt, bis sie nach Beendigung der Schwenkbewegung (Pfeil 170) in die Ausklinkungen 163 in den U-Schenkeln 159 gelangen. Dort federn die Rastzähne 154 wieder in ihre Ausgangsposition zurück (Figuren 7 und 8). An den Rastzähnen 154 angeordnete, von der U-Basis des Adapters wegweisende Halteschultern 165 arbeiten dabei mit an den Ausklinkungen 163 ausgebildeten Gegenhalteschultern 166 so zusammen, dass eine entgegen dem Pfeil 164 gerichtete Lösebewegung zwischen dem Wischerarm 12, 118 und dem Wischblatt 14 ausgeschlossen ist. Weiter sind an den Rastzähnen 154 zu den kragenartigen Ansätzen 160 weisende Anschlagschultern 167 vorhanden, welche mit ihnen zugeordneten Gegenanschlagschultern 168 der Ausklinkungen 163 zusammenwirken. Die zur Längsarretierung des Wischblatts am Wischerarm erforderlichen weiteren Schultern können entweder durch die Schulter 162 und den kragenartigen Ansatz 160 gebildet sein und/oder durch die zapfenartigen Stützen 156 und deren Stützlager 158 realisiert werden. Zum Lösen des Wischblatts 14 werden lediglich die Rastzähne 154 manuell aufeinander zu ausgelenkt (in Richtung der Pfeile 169) bis die Verriegelung zwischen den Rastzähnen 154 und den Ausklinkungen 163 aufgehoben ist (Figur 8). Danach kann das Wischblatt 14 entgegen der Richtung des Pfeiles 170 geschwenkt und vom Wischerarm gelöst werden. Auch bei dieser Ausführungsform der Erfindung sind die Verriegelungsmittel an mindestens einer der beiden Wände beziehungsweise Schenkel 142 des Adapters 140 angeordnet und im wesentlichen quer zu den Flächen dieser Wände bewegbar.

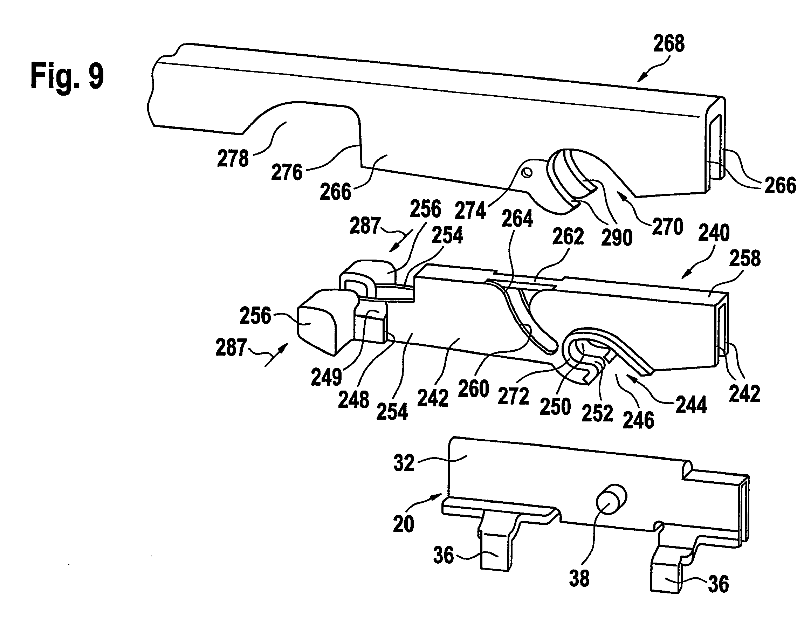

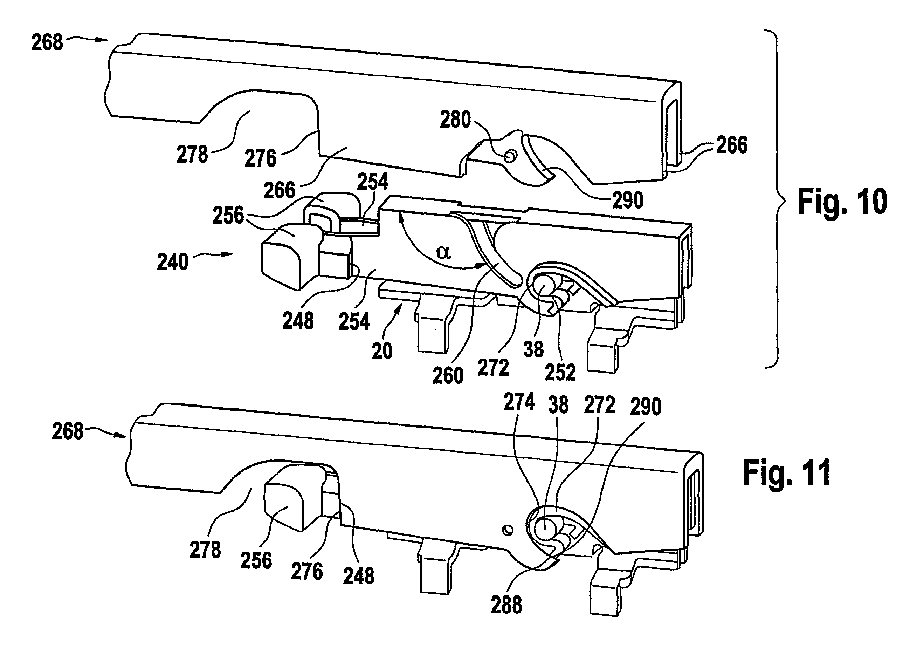

Eine weitere Ausführungsform der Erfindung ist in den Figuren 9 bis 12 gezeigt. Das Gelenkteil 20 des Wischblatts entspricht hinsichtlich der Erfindung völlig dem oben schon beschriebenen Gelenkteil. Auch der Adapter 240 entspricht im grundsätzlichen Aufbau dem Adapter 40 gemäß Figur 4. Er hat also ebenfalls einen U-förmigen Querschnitt mit U-Schenkeln 242 und in den U-Schenkeln angeordneten, zu deren freien Enden hin randoffene Aussparungen 244 zur Aufnahme der Gelenkzapfen 38 des Gelenkteils 20. Der Verlauf der Aussparungen 244 ist so angeordnet, dass deren Mündungen 246 weiter von Anschlagschultern 248 entfernt sind als die an den Enden der Aussparungen 244 befindlichen Lageraufnahmen 250 für die Gelenkzapfen 38 des Gelenkteils 20. Auch bei dieser Ausführungsform sind zur Sicherung des Adapters 240 am Gelenkteil 20 die Aussparungen 244 jeweils mit einer elastisch aufweitbaren Verengung 252 versehen. Ferner weisen die Aussparungen 244 kragenartige Ansätze 272 auf, die sich entlang dem gesamten Rand der jeweiligen Aussparung erstrecken. Die Anschlagschultern 248 sind an zungenartigen Verlängerungen 254 der U-Schenkel 242 angeordnet und so dimensioniert, dass sie sich mit Anschlagschultern 248 über die Längswand 32 des Gelenkteils 20 hinaus erstrecken. So sind die Anschlagschultern jeweils gegen eine Rückstellkraft im wesentlichen quer zu den Flächen der U-Schenkel oder Wände 242 des Adapters 240 bewegbar (Pfeile 287 in Figur 10). Zur besseren Bedienbarkeit dieser Verriegelungsmittel sind die zungenartigen Verlängerung 254 noch jeweils mit Handhaben 256 versehen. Ferner weist der Adapter 240 im Mittelbereich Führungsschlitze 260 auf, die sich von der U-Basis 258 des im Querschnitt U-förmigen Adapters 240 aus zu den freien Enden der U-Schenkel 242 hin erstrecken. Zwischen den Führungsschlitzen 260 in jedem U-Schenkel 242 verbleibt jedoch ein Stabilisierungssteg 262. Der Verlauf der Führungsschlitze 260 ist so gewählt, dass diese von ihren Mündungen an der U-Basis 258 aus, auf an ihren den Anschlagschultern 248 zugewandten Seiten mit der U-Basis einen stumpfen Winkel α einschließen (Figur 10). Im Bereich ihrer Mündungen sind die nutartigen Führungsschlitze 260 jeweils mit einer trichterartigen Erweiterung 264 versehen. Wie insbesondere aus Figur 9 ersichtlich ist, weisen die U-Schenkel 266 des Wischerarm-Anschlussteils 268 ebenfalls randoffene Aussparungen 270 für die kragenartigen Ansätze 272 des Adapters 240 auf, die zu den freien Enden der U-Schenkel 266 hin randoffen sind. Dabei liegen die Endbereiche 274 dieser kanalförmigen Aussparungen 270 näher an Gegenanschlagschultern 276, welche an den U-Schenkeln 266 des Anschlussteils 268 ausgebildet sind und von den Grund- oder Endbereichen 274 der Aussparungen 270 wegweisen. Die Gegenanschlagschultern 276 sind an Ausnehmungen 278 in den U-Schenkeln 266 des Anschlussteils 268 ausgebildet. An den einander zugewandten inneren Wangen der U-Schenkel 266 sind gegeneinander gerichtete Führungszapfen 280 angeordnet, die beim Ausführungsbeispiel aus den U-Schenkeln herausgeformt und nach innen durchgedrückt worden sind. Die Durchmesser dieser Führungszapfen 280 sind auf die Breite der Führungsschlitze 260 abgestimmt.

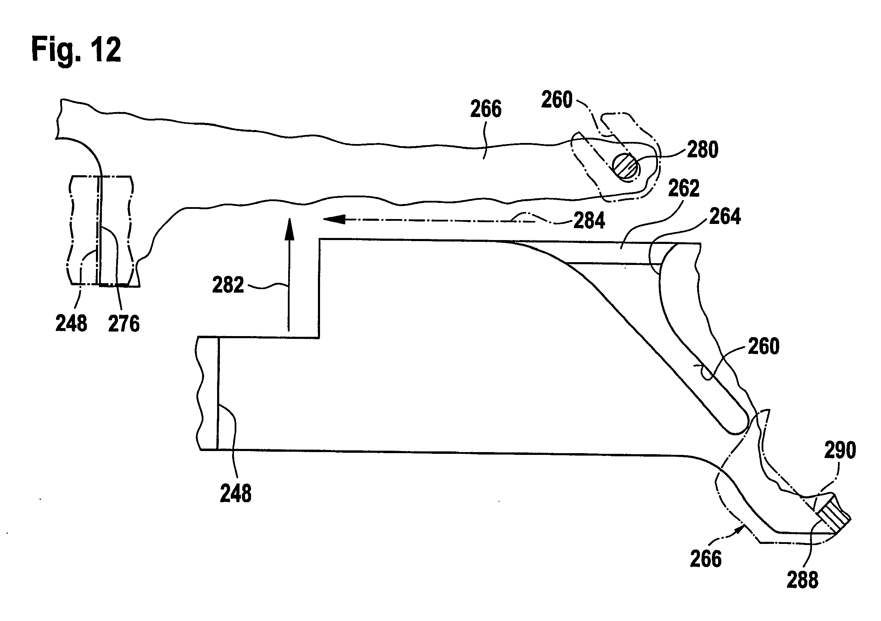

Wenn der Adapter 240 mit dem Gelenkteil 20 verbunden werden soll, werden dessen Gelenkzapfen 38 in ihre Aussparungen 244 in den U-Schenkeln 242 des Adapters 240 eingebracht bis sie nach Überwindung der Verengung 252 in ihre Lageraufnahmen 250 gelangen (Figur 10). Nun ist der Adapter 240 pendelbar jedoch unverlierbar mit dem Gelenkteil 20 verbunden und für die Endmontage des Wischhebels 10 bereit. Dazu wird der Adapter 240 so zwischen die U-Schenkel 266 des Anschlussteils 268 eingebracht, dass die Führungszapfen 280 über die trichterartigen Erweiterungen 264 in die Führungsschlitze 260 gelangen. Diese Vormontage-Position ist in Figur 12 vergrößert dargestellt, wobei die Montagebewegung durch den Pfeil 282 angedeutet ist. Mit dem Fortschreiten dieser Montagebewegung wird dem Wischblatt eine diese überlagernde Querbewegung (siehe strichpunktierter Pfeil 284) aufgezwungen, bis die Montagebewegung beendet ist. Dieser Montagevorgang kann durch an den Verlängerungen 254 beziehungsweise an den Anschlagschultern 248 angeordnete Anlaufschrägen 249 vereinfacht werden. Dann befindet sich die Führungszapfen 280 des Anschlussteils 268 im Endbereich der Führungsschlitze 260 (siehe strichpunktierte Darstellung). Damit ist auch die Quer- oder Verschiebeberichtung (Pfeil 284) beendet. Eine entsprechende Maßabstimmung stellt sicher, dass dann die Anschlagschultern 248 an den Verlängerungen 254 des Adapters 240 die Gegenanschlagschultern 276 am Anschlussteil 268 des Wischerarms 12 hintergreifen (siehe strichpunktierte Darstellung in Figur 12). Es ergibt sich dann die Montagesituation, die in Figur 11 dargestellt ist. Dort ist auch erkennbar, dass sich dann die kragenartigen Ansätze 272 des Adapters 240 mit einer zum freien Ende seines U-Schenkels 242 weisenden Stützschulter 288 an einer Gegenschulter 290 des Anschlussteils 268 anliegen. Durch diese Anordnung wird verhindert, dass sich durch äußere Einflüsse die Verengungen 252 öffnen und damit das Wischblatt gegenüber dem Wischerarm freigeben.

Die Beschreibung der Montage macht deutlich, dass die Führungsschlitze 260 Kulissenführungen für die Führungszapfen 280 bilden, die im gemeinsamen Zusammenwirken - ohne weitere Maßnahmen - die angestrebte Endposition zwischen Wischerarm und Wischblatt erzwingen.

Zum Lösen des Wischblatts 14 vom Wischerarm 12 werden zunächst die beiden Handhaben 256 beziehungsweise die zungenartigen Verlängerungen 254 der U-Schenkel 242 quer zu den an den Außenseiten der U-Schenkel des Adapters vorhandenen Wandflächen soweit zusammengedrückt (Pfeile 287, Figur 9), dass die Anschlagschultern 248 die Gegenanschlagschultern 276 freigeben. Danach kann das Wischblatt entgegen der Richtung des Pfeiles 284 (Figur 12) bewegt werden, wobei die Führungsschlitze 260 im Zusammenwirken mit den Führungszapfen 280 am Anschlussteil 268 eine dem Pfeil 282 entgegengerichtete Demontagebewegung erzwingen.

Eine in Richtung des Pfeiles 17 (Figur 1) vom Wischerarm 12 aus auf das Wischblatt 15 wirkende, für eine ordnungsgemäße Anlage der Wischleiste 30 an der zu wischenden Scheibe 15 sorgende Anlegekraft wird zuverlässig vom Wischerarm aus über das Anschlussteil 18, den Adapter 40 und das Gelenkteil 20 auf das Wischblatt 14 übertragen. Das Tragelement 22 bewirkt die vorschriftsmäßige Verteilung der Anlegekraft über die gesamte Längserstreckung der Wischleiste 30.

Aus den Beschreibungen der Ausführungsbeispiele geht klar hervor, dass jeder Wischhebel beziehungsweise jedes Wischblatt mit Verriegelungsmitteln versehen ist, die an wenigstens einer der beiden Adapterwänden angeordnet und im wesentlichen quer zu den Flächen dieser Wände bewegbar sind. Durch die Anordnung der Verriegelungseinrichtungen im Bereich zwischen der Pendelachse 16 des Wischerarms und der durch die Gelenkzapfen 38 gebildeten Schwingachse des Wischblatts befinden sich diese in einer unterhalb des Wischerarms 12 liegenden Ebene und sind somit weitgehend gegen eine unbeabsichtigte Betätigung insbesondere Lösebewegung geschützt.

## Patentansprüche

1. Wischhebel (10) mit einem Wischerarm (12) und einem an diesem angelenkten Wischblatt (14) zum Reinigen von Scheiben (15) insbesondere von Kraftfahrzeugen, das mit einem bandartig langgestreckten, federelastischen, über seine Bandflächen (26, 28) in Längsrichtung gekrümmten Tragelement (22) versehen ist, welches an seiner konkav gekrümmten Bandfläche (26) eine an der Scheibe (15) anlegbare, gummielastische Wischleiste (30) aufweist, an dessen konvex gekrümmter Bandfläche (28) ein Gelenkteil (20) sitzt, an welchem ein Adapter (40) pendelbar gelagert ist, der in Längsrichtung des Wischblatts und in auf den Bandflächen des Tragelements stehenden, mit Abstand voneinander befindlichen Ebenen ausgerichtete Wände hat und an dem Adapter bewegbare Verriegelungsmittel (68, 70) angeordnet sind, die mit Gegenverriegelungsmitteln (66) des Wischerarms zusammenwirken, **dadurch gekennzeichnet, dass** die Verriegelungsmittel an wenigstens einer der beiden Wände (42) angeordnet und im wesentlichen quer zu den Flächen dieser Wände bewegbar sind, wobei der Adapter (40) zumindest abschnittsweise einen U-förmigen Querschnitt hat, dessen U-Schenkel (42) die beiden Wände bilden, zwischen welche am Gelenkteil (20) ausgebildete Stützwände (34) passend eintauchen und die Gelenkmittel des Adapters (40) durch in den U-Schenkeln (42) angeordnete Lageraufnahmen (50) gebildet sind, welche jeweils über einen am freien Ende der U-Schenkel (42) mündenden, auf den Durchmesser des jeweiligen Gelenkbolzens (38) abgestimmten Montagekanal (46) randoffen sind.

2. Wischhebel nach Anspruch 1, **dadurch gekennzeichnet, dass** der Adapter (40) zwei mit Abstand voneinander befindliche Längswände (34) des Gelenkteils (20) mit seinen U-Schenkeln (42) passend übergreift, dass die Gelenkmittel (50, 38) an den Längswänden und an den U-Schenkeln (42) angeordnet sind und dass sich die Verriegelungsmittel (72) des aus einem elastischen Material bestehenden Adapters (40) an einer sich über die Längswände (34) hinaus erstreckenden Verlängerung (70) der U-Schenkel des Adapters befinden.

3. Wischhebel nach Anspruch 2, **dadurch gekennzeichnet, dass** der pendelnd angetriebene Wischerarm (12) den Adapter (40) mit einem im Querschnitt U-förmigen Anschlussteil (18) aufnimmt und dass sich die Verlängerung (70) des Adapters zur Pendelachse (16) erstreckt.

4. Wischhebel nach Anspruch 3, **dadurch gekennzeichnet, dass** sich die vorzugsweise gegen eine Rückstellkraft bewegbaren Verriegelungsmittel (72) des Adapters (40) an der den mit den Gegenverriegelungsmitteln (66) des Wischerarms (12) versehenen U-Schenkeln (52) des Anschlussteils (18) zugewandten Außenseite der Verlängerung (70) befinden.

5. Wischhebel nach einem der Ansprüche 1 bis 4, **dadurch gekennzeichnet, dass** an dem Adapter (40) mit Abstand voneinander, in dessen Längsrichtung einander entgegengesetzt ausgerichtete Anschläge (59, 68) ausgebildet sind, denen am Anschlussteil (18) des Wischerarms (12) vorhandene Gegenanschläge (63, 66) zugeordnet sind.

6. Wischhebel nach Anspruch 5, **dadurch gekennzeichnet, dass** wenigstens einer der am Adapter (40) befindlichen Anschläge durch dessen Verriegelungsmittel (72) gebildet ist.

7. Wischhebel nach einem der Ansprüche 1 bis 6, **dadurch gekennzeichnet, dass** an jeden der beiden U-Schenkel (42) des Adapters (40) Verriegelungsmittel (72) angeordnet sind.

8. Wischhebel nach einem der Ansprüche 3 bis 7, **dadurch gekennzeichnet, dass** an jedem der beiden U-Schenkel (52) des Anschlussteils (18) die mit den Verriegelungsmitteln (72) des Adapters (40) zusammenarbeitenden Gegenverriegelungsmittel (66) vorhanden sind.

9. Wischhebel nach einem der Ansprüche 1 bis 8, **dadurch gekennzeichnet, dass** die Gelenkmittel des Gelenkteils (20) durch je einen an jeder Längswand (34) angeordneten Gelenkbolzen (38) gebildet sind, deren Achsen miteinander fluchten.

10. Wischhebel nach einem der vorhergehenden Ansprüche, **dadurch gekennzeichnet, dass** jeder Montagekanal (46) mit einer elastisch aufweitbaren Verengung (48) versehen ist.

11. Wischhebel nach einem der Ansprüche 9 oder 10, **dadurch gekennzeichnet, dass** jeder U-Schenkel (42) des Adapters (40) an seiner Außenseite mit einem die Lageraufnahme (50) umgebenden, kragenartigen Ansatz (60) versehen ist, dem jeweils eine zumindest abschnittsweise an die Kontur des Ansatzes angepasste, zum freien Ende des jeweiligen U-Schenkels offene Aussparung (62) zugeordnet ist.

12. Wischhebel nach Anspruch 11, **dadurch gekennzeichnet, dass** die kragenartigen Ansätze (60) zusammen mit dem an deren Verlauf angepassten Abschnitt (63) der Aussparungen (62) die einen Anschläge und Gegenanschläge bilden.

13. Wischhebel nach Anspruch 12, **dadurch gekennzeichnet, dass** der Adapter (40) an zumindestens einem seiner U-Schenkel (42) mit einer einen Rastzahn (72) aufweisenden, elastisch auslenkbaren Zunge (70) versehen ist und dass der Rastzahn eine zum kragenartigen Ansatz (60) weisende Anschlagschulter (68) hat, die mit einer am Anschlussteil (18) ausgebildeten, vom kragenartigen Ansatz wegweisenden Gegenanschlagschulter (66) zusammenwirkt.

14. Wischhebel nach Anspruch 13, **dadurch gekennzeichnet, dass** die dem kragenartigen Ansatz (60) zugeordnete Aussparung (62) in den U-Schenkeln (52) des Anschlussteils (18) von ihrer Mündung (61) am freien Ende der U-Schenkel aus einen zu der Gegenanschlagschulter (66) hin gekrümmten Verlauf hat.

15. Wischhebel nach einem der Ansprüche 1 bis 13, **dadurch gekennzeichnet, dass** an jeder Außenseite der U-Schenkel (42) des Adapters (140) an dem von den Verriegelungsmitteln (154) abgewandten Längs-Endbereich miteinander fluchtende, zapfenartige Stützen (156) angeordnet sind, denen jeweils ein an den U-Schenkeln (159) des Anschlussteils (118) ausgebildetes Stützlager (158) zugeordnet ist.

16. Wischhebel nach einem der Ansprüche 13 bis 15, **dadurch gekennzeichnet, dass** der die Verriegelungsmittel bildende Rastzahn (154) des Adapters (140) mit einer von der U-Basis (144) des Adapters weg weisenden Halteschulter (165) versehen ist, der eine am Anschlussteil (118) ausgebildete, zu dessen U-Basis weisende Gegenhalteschulter (166) zugeordnet ist.

17. Wischhebel nach einem der Ansprüche 1 bis 16, **dadurch gekennzeichnet, dass** sowohl am Anschlussteil (268) des Wischerarms als auch am Wischblatt insbesondere an dessen Adapter (240) vorhandene Führungsmittel (260, 280) beim Zusammenbau dieser Bauteile zusammenwirken und deren vorschriftsmäßige Positionierung zueinander erzwingen.

18. Wischhebel nach Anspruch 17, **dadurch gekennzeichnet, dass** die Führungsmittel des Wischblatts durch eine in einem U-Schenkeln (242) des Adapters (240) vorhandene, an dessen U-Basis (258) mündende nutartigen Kulissenführung (260) gebildet sind, in welche die am Anschlussteil (268) angeordneten, als Führungszapfen (280) ausgebildeten Führungsmitteln des Wischerarms (12, 268) eintauchen.

19. Wischhebel nach Anspruch 18, **dadurch gekennzeichnet, dass** die Führungsnut (260) an ihrer Mündung mit einer trichterartigen Erweiterung (264) versehen ist.

20. Wischhebel nach einem der Ansprüche 15 bis 17, **dadurch gekennzeichnet, dass** der kragenartige Ansatz (272) mit einer zum freien Ende der U-Schenkel (242) weisenden Stützschulter (288) an einer Gegenschulter (290) des Anschlussteils (268) anliegt.

21. Wischhebel nach einem der Ansprüche 1 bis 20, **dadurch gekennzeichnet, dass** die an der Verlängerung (254) der U-Schenkel (242) angeordneten Verriegelungsmittel (248) des Adapters (240) eine zur Gelenkverbindung weisende Rastschulter (248) haben, mit der eine von der Gelenkverbindung weg weisende Gegenrastschulter (276) des Anschlussteils (268) zusammenwirkt, wenn die vorschriftsmäßige Positionierung zwischen Wischerarm (12) und Wischblatt (14) erreicht ist.

22. Wischhebel nach einem der Ansprüche 1 bis 20, **dadurch gekennzeichnet, dass** an der die Verriegelungsmittel (248) des Adapters (240) aufweisenden Verlängerung (254) der U-Schenkel (242) eine seitliche vorspringende Handhabe (256) angeordnet ist.

23. Wischblatt (14) zum Reinigen von Scheiben insbesondere von Kraftfahrzeugen, mit einem Adapter (40) zum lösbaren Verbinden mit einem Wischerarm (12), **dadurch gekennzeichnet daß** das Wischblatt zur Verwendung mit einem Wischhebel nach Anspruch 1 ist.

## Claims

1. Wiper lever (10) comprising a wiper arm (12) and a wiper blade (14), which is connected to the same in an articulated manner, for cleaning windows (15), in particular of motor vehicles, the wiper lever being provided with a spring-elastic supporting element (22) which is elongate in the manner of a band, is curved in the longitudinal direction over its band surfaces (26, 28) and, on its concavely curved band surface (26), has a rubber-elastic wiper strip (30), which can be placed against the window (15), and, on the convexly curved band surface (28) of which is fitted a hinge part (20) on which an adapter (40) is mounted such that it can oscillate, said adapter having walls which are oriented in the longitudinal direction of the wiper blade and in planes which are perpendicular to the band surfaces of the supporting element and are located at a distance from one another, and moveable locking means (68, 70) are arranged on the adapter and interact with mating locking means (66) of the wiper arm, **characterized in that** the locking means are arranged on at least one of the two walls (34) and are moveable substantially transversely with respect to the surfaces of said walls, the adapter (40) having, at least in some sections, a U-shaped cross section, the U limbs (42) of which form the two walls between which supporting walls (34) formed on the hinge part (20) enter in a fitting manner, and the hinge means of the adapter (40) are formed by bearing receptacles (50) which are arranged in the U limbs (42) and are each open at the edge via an installation channel (46) which opens at the free end of the U limbs (42) and is matched to the diameter of the respective hinge pin (38).

2. Wiper lever according to Claim 1, **characterized in that** the adapter (40) engages in a fitting manner by means of its U limbs (42) over two longitudinal walls (34) of the hinge part (20), which longitudinal walls are located at a distance from each other, **in that** the hinge means (50, 38) are arranged on the longitudinal walls and on the U limbs (42), and **in that** the locking means (72) of the adapter (40), which is composed of an elastic material, are located on an extension (70) of the U limbs of the adapter, which extension extends beyond the longitudinal walls (34).

3. Wiper lever according to Claim 2, **characterized in that** the wiper arm (12) which is driven in an oscillating manner receives the adapter (40) by means of a connecting part (18) which is U-shaped in cross section, and **in that** the extension (70) of the adapter extends with respect to the axis of oscillation (16).

4. Wiper lever according to Claim 3, **characterized in that** the locking means (72) of the adapter (40), which locking means are preferably movable counter to a resetting force, are located on the outer side of the extension (70), which side faces the U limbs (52) of the connecting part (18), which U limbs are provided with the mating locking means (66) of the wiper arm (12).

5. Wiper lever according to one of Claims 1 to 4, **characterized in that** stops (59, 68) are formed on the adapter (40) at a distance from each other and are oriented in an opposite manner to each other in the longitudinal direction of the adapter, said stops being assigned mating stops (63, 66) which are present on the connecting part (18) of the wiper arm (12).

6. Wiper lever according to Claim 5, **characterized in that** at least one of the stops located on the adapter (40) is formed by the locking means (72) of said adapter.

7. Wiper lever according to one of Claims 1 to 6, **characterized in that** locking means (72) are arranged on each of the two U limbs (42) of the adapter (40).

8. Wiper lever according to one of Claims 3 to 7, **characterized in that** the mating locking means (66) which cooperate with the locking means (72) of the adapter (40) are present on each of the two U limbs (52) of the connecting part (18).

9. Wiper lever according to one of Claims 1 to 8, **characterized in that** the hinge means of the hinge part (20) are formed by a respective hinge pin (38) arranged on each longitudinal wall (34), the axes of which hinge pins are aligned with each other.

10. Wiper lever according to one of the preceding claims, **characterized in that** each installation channel (46) is provided with an elastically expandable constriction (48).

11. Wiper lever according to either of Claims 9 or 10, **characterized in that** the outer side of each U limb (42) of the adapter (40) is provided with a collar-like attachment (60) which surrounds the bearing receptacle (50) and which is in each case assigned a cut-out (62) which is matched at least in some sections to the contour of the attachment and is open to the free end of the respective U limb.

12. Wiper lever according to Claim 11, **characterized in that** the collar-like attachments (60) together with that section (63) of the cut-outs (62) which is matched to the profile of said attachments form the stops and meeting stops.

13. Wiper lever according to Claim 12, **characterized in that** the adapter (40) is provided on at least one of its U limbs (42) with an elastically deflectable tongue (70) which has a latching tooth (72), and **in that** the latching tooth has a stop shoulder (68) which points to the collar-like attachment (60) and interacts with a mating stop shoulder (66) which is formed on the connecting part (18) and points away from the collar-like attachment.

14. Wiper lever according to Claim 13, **characterized in that** the cut-out (62), which is assigned to the collar-like attachment (60), in the U limbs (52) of the connecting part (18) has a profile which is curved from its mouth (61) at the free end of the U limbs to the mating stop shoulder (66).

15. Wiper lever according to one of Claims 1 to 13, **characterized in that** pin-like supports (156) which are aligned with each other are arranged on each outer side of the U limbs (42) of the adapter (140) at the longitudinal end region which faces away from the locking means (154), said supports each being assigned a supporting bearing (158) formed on the U limbs (159) of the connecting part (118).

16. Wiper lever according to one of Claims 13 to 15, **characterized in that** the latching tooth (154) of the adapter (140), which latching tooth forms the locking means, is provided with a retaining shoulder (165) which points away from the U base (144) of the adapter and is assigned a mating retaining shoulder (166) which is formed on the connecting part (118) and points to the U base of said connecting part.

17. Wiper lever according to one of Claims 1 to 16, **characterized in that** guide means (260, 280) present both on the connecting part (268) of the wiper arm and on the wiper blade, in particular on the adapter (240) thereof, interact when said components are assembled and bring about their correct positioning with respect to one another.

18. Wiper lever according to Claim 17, **characterized in that** the guide means of the wiper blade are formed by a groove-like slotted guide mechanism (260) which is present in a U limb (242) of the adapter (240), opens at the U base (258) thereof and into which the guide means of the wiper arm (12, 268) enter, said guide means being arranged on the connecting part (268) and being designed as guide pins (280).

19. Wiper lever according to Claim 18, **characterized in that** the guide groove (260) is provided at its mouth with a funnel-like widened portion (264).

20. Wiper lever according to one of Claims 15 to 17, **characterized in that** the collar-like attachment (272) bears with a supporting shoulder (288), which points to the free end of the U limbs (242), against a mating shoulder (290) of the connecting part (268).

21. Wiper lever according to one of Claims 1 to 20, **characterized in that** the locking means (248) of the adapter (240), which locking means are arranged on the extension (254) of the U limbs (242), have a latching shoulder (248) which points to the hinge connection and with which a mating latching shoulder (276) of the connecting part (268), which matching latching shoulder points away from the hinge connection, interacts when the correct positioning between wiper arm (12) and wiper blade (14) is reached.

22. Wiper lever according to one of Claims 1 to 20, **characterized in that** a lateral projecting handle (256) is arranged on the extension (254) of the U limbs (242), which extension has the locking means (248) of the adapter (240).

23. Wiper blade (14) for cleaning windows, in particular of motor vehicles, with an adapter (40) for releasable connection to a wiper arm (12), **characterized in that** the wiper blade is intended for use with a wiper lever according to Claim 1.

## Revendications

1. Levier d'essuie-glace (10) comportant un bras d'essuie-glace (12) portant de manière articulée un balai d'essuie-glace (14) pour nettoyer les vitres (15) notamment celles de véhicules automobiles, comportant un élément de support (22) en forme de bande, allongé, élastique comme un ressort et dont les surfaces de bande (26, 28) sont cintrées dans la direction longitudinale, sa surface de bande (28) cintrée de manière concave portant une lame d'essuie-glace (30) élastique comme du caoutchouc, appliquée contre la vitre (15) et sa surface de bande (28) à courbure convexe étant munie d'une pièce d'articulation (20) à laquelle est articulé de manière pendulaire un adaptateur (40) ayant des parois s'étendant dans la direction longitudinale du balai d'essuie-glace, dans une position debout par rapport aux surfaces de bande de l'élément de support et ces parois sont écartées l'une de l'autre, l'adaptateur portant des moyens de verrouillage (68, 70), mobiles, coopérant avec des moyens de verrouillage complémentaires (66) du bras d'essuie-glace,
**caractérisé en ce que**
les moyens de verrouillage sont prévus sur au moins l'une des deux parois latérales (42) et ils sont mobiles principalement dans la direction transversale aux surfaces de ces parois,
l'adaptateur (40) ayant au moins par segments, une section en forme de U dont les branches (42) de la forme en U constituent les deux parois entre lesquelles se logent de manière ajustée les parois d'appui (34) réalisées sur la pièce d'articulation (20), et les moyens d'articulation de l'adaptateur (40) sont formés par des logements de palier (50) prévus dans les branches (42) en forme de U, ces logements débouchant au niveau de l'extrémité libre des branches (42) en forme de U en débouchant sur le bord par un canal de montage (46) correspondant au diamètre du goujon d'articulation (38) respectif.

2. Levier d'essuie-glace selon la revendication 1,
**caractérisé en ce que**
l'adaptateur (40) chevauche de manière ajustée deux parois longitudinales (34) écartées l'une de l'autre et appartenant à la pièce d'articulation (20) par ses branches (42) en forme de U,
les moyens d'articulation (50, 38) sont prévus sur les parois longitudinales et sur les branches (42) en forme de U, et
les moyens de verrouillage (72) de l'adaptateur (40) réalisés en une matière élastique, se trouvent sur un prolongement (70) des branches en U de l'adaptateur s'étendant au-delà des parois longitudinales (34).

3. Balai d'essuie-glace selon la revendication 2,
**caractérisé en ce que**
le bras d'essuie-glace (12) entraîné suivant un mouvement pendulaire reçoit l'adaptateur (40) par une pièce de raccordement (18) ayant une section en forme U et le prolongement (70) de l'adaptateur s'étend en direction de l'axe (16) du mouvement pendulaire.

4. Balai d'essuie-glace selon la revendication 3,
**caractérisé en ce que**
les moyens de verrouillage (72) de l'adaptateur (40), mobiles de préférence contre une force de rappel, se trouvent sur le côté extérieur du prolongement (70) tourné vers les branches en forme de U (52) de la pièce de raccordement (18), qui portent les moyens de verrouillage complémentaires (66) du bras d'essuie-glace (12).

5. Balai d'essuie-glace selon les revendications 1 à 4,
**caractérisé en ce que**
l'adaptateur (40) comporte des butées (59, 68) écartées l'une de l'autre et opposées dans sa direction longitudinale, et la pièce de raccordement (18) du bras d'essuie-glace (12) comporte des butées complémentaires (63, 66) correspondantes.

6. Balai d'essuie-glace selon la revendication 5,
**caractérisé en ce qu'**
au moins l'une des butées de l'adaptateur (40) est constituée par ses moyens de verrouillage (72).

7. Balai d'essuie-glace selon les revendications 1 à 6,
**caractérisé par**
des moyens de verrouillage (72) prévus sur chacune des deux branches (42) en forme de U de l'adaptateur (40).

8. Balai d'essuie-glace selon les revendications 3 à 7,
**caractérisé en ce que**
chacune des deux branches (52) en forme de U de la pièce de raccordement (18) comporte des moyens de verrouillage complémentaires (66) coopérant avec les moyens de verrouillage (72) de l'adaptateur (40).

9. Balai d'essuie-glace selon les revendications 1 à 8,
**caractérisé en ce que**
les moyens d'articulation de la pièce d'articulation (20) sont constitués chacun par un goujon d'articulation (38) associé à chacune des parois longitudinales (34), les axes des goujons étant alignés.

10. Balai d'essuie-glace selon les revendications précédentes,
**caractérisé en ce que**
chaque canal de montage (46) est muni d'une partie rétrécie (48) qui peut s'élargir élastiquement.

11. Balai d'essuie-glace selon la revendication 9 ou 10,
**caractérisé en ce que**
chacune des branches (42) en forme de U de l'adaptateur (40) comporte sur son côté extérieur, un prolongement (60) en forme de collerette entourant le logement de palier (50), et à ce prolongement en forme de collerette est adaptée la découpe (62) ouverte à l'extrémité libre de chacune des branches en forme de U, découpe adaptée au moins par segments au contour du prolongement.

12. Balai d'essuie-glace selon la revendication 11,
**caractérisé en ce que**
les butées et les butées complémentaires sont formées par les prolongements en forme de collerettes (60) et le segment (63) des découpes (62) est adapté à la forme des collerettes.

13. Balai d'essuie-glace selon la revendication 12,
**caractérisé en ce que**
sur au moins l'une de ces branches (42) en forme de U, l'adaptateur (40) est muni d'une languette (70) qui peut fléchir élastiquement, et est munie d'une dent d'enclipsage (72), et
la dent d'enclipsage (72) a un épaulement formant butée (68) tourné vers le prolongement en forme de collerette (60), cet épaulement coopérant avec un épaulement complémentaire (66) réalisé sur la pièce d'articulation (18), cet épaulement complémentaire étant dirigé dans la direction opposée à celle du prolongement en forme de collerette.

14. Balai d'essuie-glace selon la revendication 13,
**caractérisé en ce que**
la découpe (62) associée au prolongement en forme de collerette (60), réalisée dans les branches (52) en forme de U de la pièce de raccordement (18), a un tracé courbe partant de son embouchure (61) à l'extrémité libre de la branche en forme de U vers l'épaulement de butée complémentaire (66).

15. Balai d'essuie-glace selon les revendications 1 à 13,
**caractérisé en ce que**
chaque côté extérieur des branches (42) en forme de U de l'adaptateur (140) comporte des appuis en forme de tétons (156), alignés, et prévus dans la zone d'extrémité longitudinale à l'opposé des moyens de verrouillage (154), et un palier d'appui (158) respectif réalisé dans les branches (159) en forme de U de la pièce de raccordement (118) est associé à ces appuis.

16. Balai d'essuie-glace selon les revendications 13 à 15,
**caractérisé en ce que**
la dent d'enclipsage (154) de l'adaptateur (140) qui constitue le moyen de verrouillage est munie d'un épaulement de fixation (165) dirigé dans la direction opposée à celle de la base (144) de la forme en U de l'adaptateur, et à cet épaulement est associé un épaulement de fixation (166) complémentaire, réalisé sur la pièce de raccordement (118) et tourné vers la base de la forme en U.

17. Balai d'essuie-glace selon les revendications 1 à 16,
**caractérisé en ce qu'**
à la fois la pièce de raccordement (268) du bras d'essuie-glace et aussi les moyens de guidage (260, 280) prévus sur le balai d'essuie-glace notamment sur son adaptateur (240), coopèrent lors de l'assemblage de ces pièces et obligent à réaliser le positionnement prescrit.

18. Balai d'essuie-glace selon la revendication 17,
**caractérisé en ce que**
les moyens de guidage du balai d'essuie-glace sont formés par une coulisse de guidage (260) en forme de rainure prévue dans l'une des branches (242) en forme de U de l'adaptateur (240), cette coulisse débouchant à la base de la forme en U (258), et les moyens de guidage du bras d'essuie-glace (12, 268) réalisés sous la forme de goujons de guidage (280) portés par la pièce de raccordement (268) pénètrent dans cette coulisse de guidage.

19. Balai d'essuie-glace selon la revendication 18,
**caractérisé en ce que**
la rainure formant la coulisse de guidage (260) a une entrée constituée par un élargissement en entonnoir (264).

20. Balai d'essuie-glace selon les revendications 15 à 17,
**caractérisé en ce que**
le prolongement en forme de collerette (272) s'appuie par son épaulement d'appui (288) tourné vers l'extrémité libre des branches (242) en forme de U contre un épaulement complémentaire (290) de la pièce de raccordement (268).

21. Balai d'essuie-glace selon les revendications 1 à 20,
**caractérisé en ce que**
les moyens de verrouillage (248) de l'adaptateur (240) prévus sur le prolongement (254) des branches (242) en forme de U, ont un épaulement d'enclipsage (248) tourné vers la liaison articulée et un épaulement d'enclipsage complémentaire (276) de la pièce de raccordement (268), tourné dans la direction opposée à celle de la liaison articulée, coopère avec l'épaulement d'enclipsage lorsque l'on arrive dans la position prescrite entre le bras d'essuie-glace (12) et le balai d'essuie-glace (14).

22. Balai d'essuie-glace selon les revendications 1 à 20,
**caractérisé en ce que**
les prolongements (254) des branches (242) en forme de U comportant les moyens de verrouillage (248) de l'adaptateur (240), ont une poignée (256) venant latéralement en saillie.

23. Balai d'essuie-glace (14) pour nettoyer des vitres notamment de véhicules automobiles comportant un adaptateur (40) pour être relié de manière amovible à un bras d'essuie-glace (12),
**caractérisé en ce que**
le balai d'essuie-glace est utilisé en combinaison avec un levier d'essuie-glace selon la revendication 1.
